# EUROPEAN PATENT APPLICATION

(11) **EP 4 353 528 A1**
(43) Date of publication of application: **17.04.2024**
(21) Application number: 23185227.8
(22) Date of filing: 13.07.2023
(51) Int. Cl.: B60N 2/28, B60N 2/885

(54) **HEADREST MECHANISM AND SAFETY SEAT**

(30) Priority: 13.10.2022 CN 202222706880 U
(71) Applicant: Ningbo Baby First Baby Products Co., Ltd., Ningbo, Zhejiang 315412 (CN)
(72) Inventor: FANG, Chenyu, Ningbo, Zhejiang, 315412 (CN); GUO, Yaya, Ningbo, Zhejiang, 315412 (CN)
(74) Representative: Ipside

(57) **Abstract**

The present invention relates to the technical field of safety seats and provides a headrest mechanism and a safety seat. The headrest mechanism provided by the present invention includes: a main headrest housing, a side protective member, an elastic member and a gear member. The side protective member is provided with a rotating shaft portion, and the main headrest housing is provided with a rotating shaft cavity adapted to the rotating shaft portion. The gear member is inserted into the rotating shaft portion, the elastic member is mounted in the rotating shaft portion, and the elastic member pushes the gear member to protrude in a direction away from an axis of the rotating shaft portion. According to the headrest mechanism and the safety seat provided by the present invention, the rotating shaft portion can be used to provide a mounting space for the elastic member and the gear member, improving the structure compactness, enabling the headrest mechanism to have a folding function, and also providing an abrupt sense of operation, which can facilitate the folding and storage of the headrest mechanism.

## Description

### Technical Field

The present invention relates to the technical field of safety seats, and in particular to a headrest mechanism and a safety seat.

### Background Art

A protective portion is generally provided at a side of a headrest of a safety seat for improving the protection of the head of a occupant. Because of the existence of the protective portion, the headrest occupies a large space, which is not conducive to the storage of the safety seat. In addition, the headrest is foldable. Although the space occupied by the headrest can be reduced by means of folding, a conventional headrest locking device needs to be mounted on a headrest housing, which also needs to occupy a larger space. Also, during folding of the headrest, it is difficult for a user to judge whether the position of the headrest has reached a stable state due to the lack of abrupt sense.

### Summary

An object of the present invention is to provide a headrest mechanism and a safety seat, which can enable the headrest mechanism to have a folding function and can alleviate the technical problem of an gear member occupying a large mounting space.

In a first aspect, a headrest mechanism provided by the present invention includes: a main headrest housing, a side protective member, an elastic member and a gear member, wherein
the side protective member is provided with a rotating shaft portion, and the main headrest housing is provided with a rotating shaft cavity adapted to the rotating shaft portion; and
the gear member is inserted into the rotating shaft portion, the elastic member is mounted in the rotating shaft portion, and the elastic member pushes the gear member to protrude in a direction away from an axis of the rotating shaft portion.

In connection with the first aspect, the present invention provides a first possible embodiment of the first aspect, wherein the main headrest housing includes: a base shell and a cover plate, the cover plate being connected to the base shell, and the rotating shaft cavity being formed between the cover plate and the base shell.

In connection with the first aspect, the present invention provides a second possible embodiment of the first aspect, wherein the main headrest housing is provided with a snap groove adapted to the gear member.

In connection with the second possible embodiment of the first aspect, the present invention provides a third possible embodiment of the first aspect, wherein the snap groove includes: a first arc-shaped groove, a second arc-shaped groove and a third arc-shaped groove, the first arc-shaped groove, the second arc-shaped groove and the third arc-shaped groove being disposed at intervals in a circumferential direction of the rotating shaft portion, and all of the first arc-shaped groove, the second arc-shaped groove and the third arc-shaped groove being disposed on the main headrest housing.

In connection with the third possible embodiment of the first aspect, the present invention provides a fourth possible embodiment of the first aspect, wherein a first transition arc is provided at an adjacent area of the first arc-shaped groove and the second arc-shaped groove, and a second transition arc is provided at an adjacent area of the second arc-shaped groove and the third arc-shaped groove.

In connection with the second possible embodiment of the first aspect, the present invention provides a fifth possible embodiment of the first aspect, wherein a ball head is provided at an end of the gear member facing the snap groove.

In connection with the first aspect, the present invention provides a sixth possible embodiment of the first aspect, wherein the side protective member includes: a first side headrest and a second side headrest; and
each of the first side headrest and the second side headrest is provided with the rotating shaft portion, and each of the first side headrest and the second side headrest is rotatably connected to the main headrest housing by means of the rotating shaft portion.

In connection with the sixth possible embodiment of the first aspect, the present invention provides a seventh possible embodiment of the first aspect, wherein each of the first side headrest and the second side headrest includes: a head pad and a side cover, the head pad being connected to the side cover, and the side cover being provided with the rotating shaft portion.

In connection with the sixth possible embodiment of the first aspect, the present invention provides an eighth possible embodiment of the first aspect, wherein the headrest mechanism has a rest region, and has a folded state and an unfolded state;
in the unfolded state, the rest region is located between the first side headrest and the second side headrest; and
in the folded state, both of the first side headrest and the second side headrest are folded into the rest region.

In a second aspect, a safety seat provided by the present invention includes: a seat body and a headrest mechanism as described in the first aspect, the headrest mechanism being mounted on the seat body.

The embodiments of the present invention have brought the following beneficial effects: the side protective member is provided with the rotating shaft portion, the main headrest housing is provided with the rotating shaft cavity adapted to the rotating shaft portion, the gear member is inserted into the rotating shaft portion, the elastic member is mounted in the rotating shaft portion, and the elastic member pushes the gear member to protrude in the direction away from the axis of the rotating shaft portion, so that the rotating shaft portion can be used to provide a mounting space for the elastic member and the gear member, improving the structural compactness, and enabling the headrest mechanism to have a folding function, which can facilitate the storage of the headrest mechanism.

In order to make the above-mentioned objects, features and advantages of the present invention more obvious and easy to understand, preferred embodiments are given below, and are detailed as follows in conjunction with the accompanying drawings.

### Brief Description of the Drawings

In order to more clearly illustrate the technical solutions in specific embodiments of the present invention or related technologies, the accompanying drawings that need to be used in the descriptions of the specific embodiments or related technologies are briefly introduced in the following. Obviously, the drawings in the following description are some embodiments of the present invention, and for those of ordinary skill in the art, other drawings can also be obtained from these drawings without involving any inventive effort.
FIG. 1 is an exploded view of a headrest mechanism according to an embodiment of the present invention;
FIG. 2 is a schematic diagram of the headrest mechanism according to an embodiment of the present invention in an unfolded state;
FIG. 3 is a schematic diagram of position A in FIG. 2;
FIG. 4 is a schematic diagram of the headrest mechanism according to an embodiment of the present invention in a first folded state;
FIG. 5 is a schematic diagram of position B in FIG. 4;
FIG. 6 is a schematic diagram of the headrest mechanism according to an embodiment of the present invention in a second folded state; and
FIG. 7 is a schematic diagram of position C in FIG. 6.

List of reference signs: 010 - Snap groove; 011 - First arc-shaped groove; 012 - Second arc-shaped groove; 013 - Third arc-shaped groove; 100 - Main headrest housing; 101 - Rest region; 110 - Base shell; 120 - Cover plate; 200 - Side protective member; 201 - Rotating shaft portion; 210 - First side headrest; 211 - Head pad; 212 - Side cover; 220 - Second side headrest; 300 - Elastic member; 400 - Gear member; 401 - Ball head.

### Detailed Description of Embodiments

The technical solutions of the present invention will be clearly and completely described below with reference to the accompanying drawings. Obviously, the described embodiments are some of, rather than all of, the embodiments of the present invention. On the basis of the embodiments of the present invention, all other embodiments obtained by those of ordinary skill in the art without involving any inventive effort shall fall within the scope of protection of the present invention.

In the description of the present invention, it should be noted that an orientation or positional relationship indicated by the term "center", "upper", "lower", "left", "right", "vertical", "horizontal", "inner", "outer", or the like is based on the orientation or positional relationship shown in the accompanying drawings, which is only for convenience of describing the present invention and simplifying the description, rather than indicating or implying that the referred device or element must have a particular orientation, be constructed and operated in a particular orientation, and therefore should not be construed as limiting the present invention. In addition, the terms "first", "second" and "third" are for descriptive purposes only and should not be construed as indicating or implying relative importance. The physical quantity in the formula, if not marked separately, should be understood as a basic quantity of a basic unit of The International System of Units, or a derived quantity derived from the basic quantity through mathematical operations such as multiplication, division, differentiation or integration.

In the description of the present invention, it should be noted that unless otherwise explicitly specified and defined, terms "mounting", "connecting" and "connection" should be understood in a broad sense, for example, they can be a fixed connection, a detachable connection, or an integrated connection; or may be a mechanical connection or an electrical connection; or may be a direct connection, an indirect connection by means of an intermediate medium, or internal communication between two elements. For those of ordinary skill in the art, the specific meaning of the terms mentioned above in the present invention should be construed in specific situations.

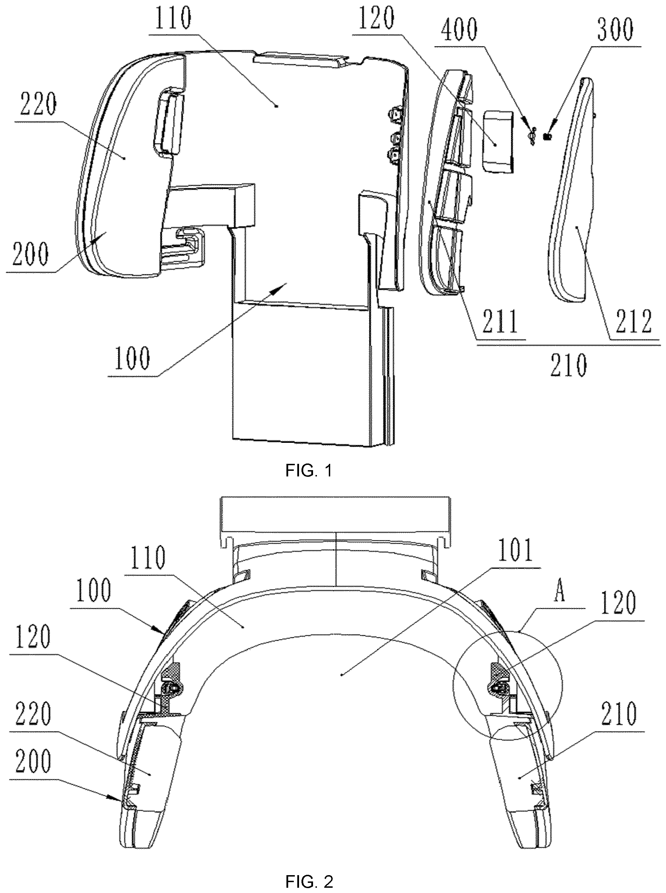

As shown in FIGS. 1, 2, 3, 4, 5, 6 and 7, a headrest mechanism provided by an embodiment of the present invention includes: a main headrest housing 100, a side protective member 200, an elastic member 300 and a gear member 400. The side protective member 200 is provided with a rotating shaft portion 201, and the main headrest housing 100 is provided with a rotating shaft cavity adapted to the rotating shaft portion 201. The gear member 400 is inserted into the rotating shaft portion 201, the elastic member 300 is mounted in the rotating shaft portion 201, and the elastic member 300 pushes the gear member 400 to protrude in a direction away from an axis of the rotating shaft portion 201.

Specifically, the rotating shaft portion 201 provides a mounting space for the elastic member 300 and the gear member 400, so there is no need to reserve a mounting space for the gear member 400 on the main headrest housing 100, thereby improving the structural compactness. In addition, during folding of the side protective member 200 relative to the main headrest housing 100, the gear member 400 is driven by an elastic force of the elastic member 300, so that frictional resistance can be generated between the gear member 400 and the main headrest housing 100, thereby generating damping for the folding operation. It is possible to reduce the space occupied by the headrest mechanism by folding the side protective member 200 relative to the main headrest housing 100, thereby facilitating the storage of the headrest mechanism.

In an embodiment of the present invention, the main headrest housing 100 includes: a base shell 110 and a cover plate 120, the cover plate 120 being connected to the base shell 110, and the rotating shaft cavity being formed between the cover plate 120 and the base shell 110. Here, the base shell 110 may be connected to the cover plate 120 by means of snap-fitting or bolting, and the base shell 110 and the cover plate 120 are of a split structure, thereby facilitating processing to form the rotating shaft cavity.

Further, the main headrest housing 100 is provided with a snap groove 010 adapted to the gear member 400.

Specifically, the snap groove 010 may be processed on the base shell 110 or the cover plate 120, the snap groove 010 is located on an inner wall of the rotating shaft cavity, and the gear member 400 is snap fitted into the snap groove 010, so that the side protective member 200 may be fixed with respect to the main headrest housing 100.

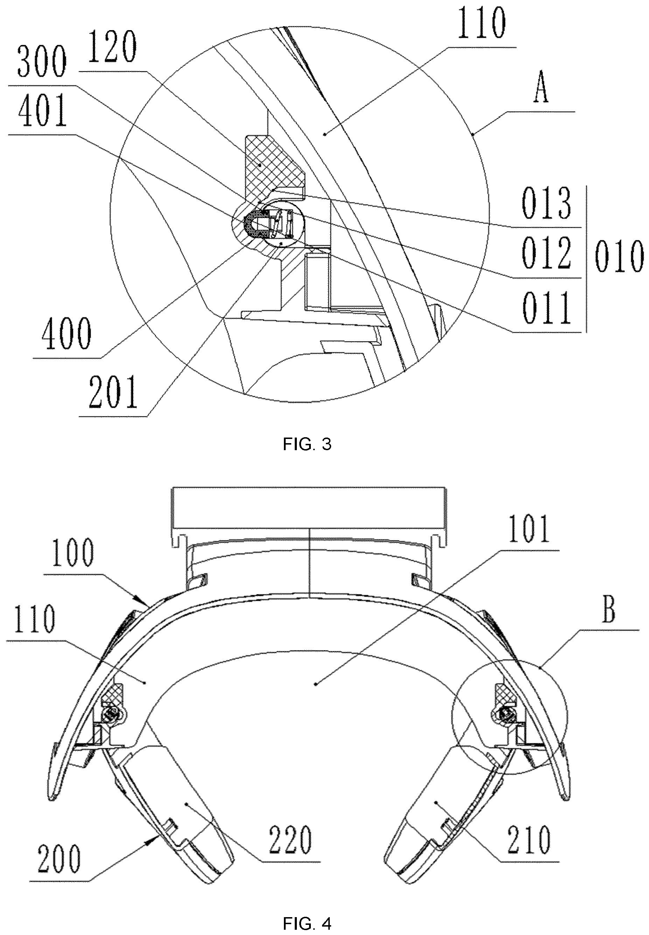

As shown in FIGS. 3, 5 and 7, the snap groove 010 includes: a first arc-shaped groove 011, a second arc-shaped groove 012 and a third arc-shaped groove 013, the first arc-shaped groove 011, the second arc-shaped groove 012 and the third arc-shaped groove 013 being disposed at intervals in a circumferential direction of the rotating shaft portion 201, and all of the first arc-shaped groove 011, the second arc-shaped groove 012 and the third arc-shaped groove 013 being disposed on the main headrest housing 100.

As shown in FIGS. 2 and 3, in an unfolded state, the gear member 400 is snap fitted into the first arc-shaped groove 011, in which case a rest region 101 is located between a first side headrest 210 and a second side headrest 220.

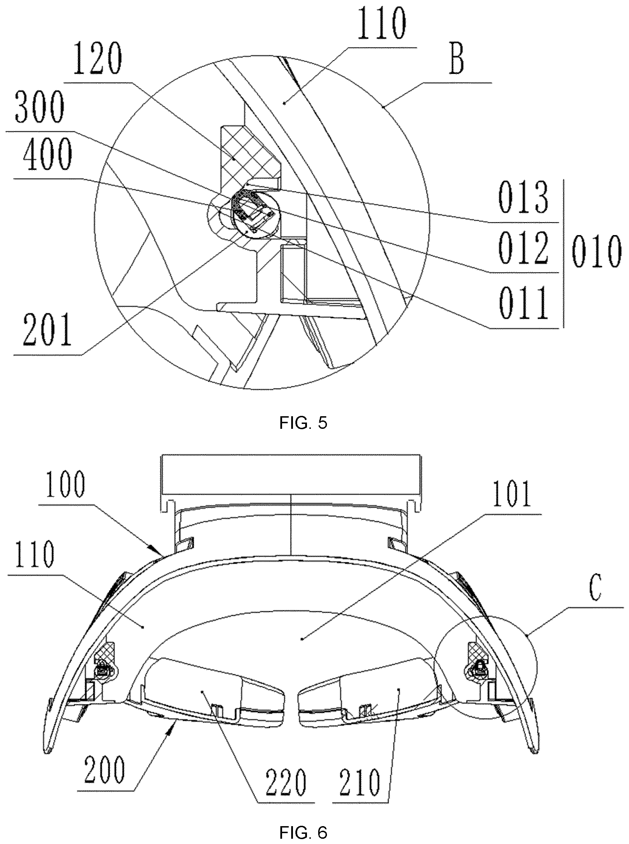

As shown in FIGS. 4 and 5, in a first folded state, the gear member 400 is snap fitted into the second arc-shaped groove 012, and each of the first side headrest 210 and the second side headrest 220 is folded towards the interior of the rest region 101.

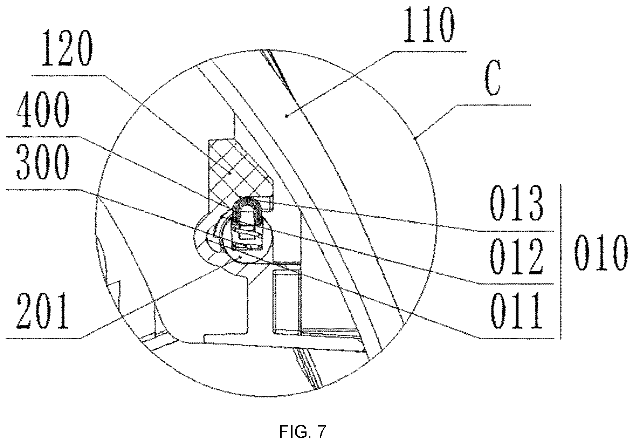

As shown in FIGS. 6 and 7, in a second folded state, the gear member 400 is snap fitted into the third arc-shaped groove 013, and the first side headrest 210 and the second side headrest 220 are folded into the arc-shaped rest region 101 enclosed by the base shell 110, thereby minimizing the space occupied by the headrest mechanism.

As shown in FIGS. 3, 5, and 7, a first transition arc is provided at an adjacent area of the first arc-shaped groove 011 and the second arc-shaped groove 012, and a second transition arc is provided at an adjacent area of the second arc-shaped groove 012 and the third arc-shaped groove 013. During the sliding of the gear member 400 between the first arc-shaped groove 011, the second arc-shaped groove 012, and the third arc-shaped groove 013, the first transition arc enables the gear member 400 to smoothly reciprocate between the first arc-shaped groove 011 and the second arc-shaped groove 012, and the second transition arc enables the gear member 400 to smoothly reciprocate between the second arc-shaped groove 012 and the third arc-shaped groove 013. In this process, the elastic member 300 is compressed when the gear member 400 is pressed, and the elastic member 300 rebounds when the gear member 400 is snapped in place, thereby enabling the gear member 400 to be stably snapped into one of the first arc-shaped groove 011, the second arc-shaped groove 012, and the third arc-shaped groove 013.

Further, a ball head 401 is provided at an end of the gear member 400 facing the snap groove 010, and the ball surface of the ball head 401 enables the gear member 400 to smoothly slide between the snap positions.

As shown in FIGS. 1, 2, 4 and 6, the side protective member 200 includes: a first side headrest 210 and a second side headrest 220. Each of the first side headrest 210 and the second side headrest 220 is provided with the rotating shaft portion 201, and each of the first side headrest 210 and the second side headrest 220 is rotatably connected to the main headrest housing 100 by means of the rotating shaft portion 201. Here, the first side headrest 210 and the second side headrest 220 are independent of each other and can be folded separately.

Further, each of the first side headrest 210 and the second side headrest 220 includes: a head pad 211 and a side cover 212, the head pad 211 being connected to the side cover 212, and the side cover 212 being provided with the rotating shaft portion 201.

Specifically, the head pad 211 is made of a cushioning material such as sponge or foam, which can damp the impact on the head, and avoid injuries to the occupant. The side cover 212 is provided with an integrally formed rotating shaft portion 201, thereby reducing the difficulty in processing the product, and reducing the production cost.

Further, the headrest mechanism has a rest region 101, and has a folded state and an unfolded state. In the unfolded state, the rest region 101 is located between the first side headrest 210 and the second side headrest 220. In the folded state, both of the first side headrest 210 and the second side headrest 220 are folded into the rest region 101. Here, the folded state is divided into a first folded state and a second folded state, and each state corresponds to an arc-shaped groove adapted to the gear member 400, enabling the headrest mechanism to have a sense of gear operation, and facilitating a user in judging whether to adjust in place. In the folded state, both of the first side headrest 210 and the second side headrest 220 are turned towards the interior of the rest region 101, thereby minimizing the space occupied by the headrest mechanism.

A safety seat provided by an embodiment of the present invention includes: a seat body and a headrest mechanism as described in the above embodiments, the headrest mechanism being mounted on the seat body. The main headrest housing 100 is fixedly connected or removably connected to the seat body. In an embodiment of the present invention, the safety seat has the technical effects of the headrest mechanism described above, which will not be repeated here.

Finally, it should be noted that the foregoing embodiments are only used to illustrate the technical solutions of the present invention, but not to limit them; although the present invention has been described in detail with reference to the foregoing embodiments, those of ordinary skill in the art should understand that it is still possible to modify the technical solutions described in the foregoing embodiments, or perform equivalent substitutions for some or all of the technical features therein; however, these modifications or substitutions do not make the essence of the corresponding technical solutions deviate from the scope of the technical solutions of the embodiments of the present invention.

## Claims

1. **A** headrest mechanism, **characterized by** comprising: a main headrest housing (100), a side protective member (200), an elastic member (300) and a gear member (400), wherein
the side protective member (200) is provided with a rotating shaft portion (201), and the main headrest housing (100) is provided with a rotating shaft cavity adapted to the rotating shaft portion (201); and
the gear member (400) is inserted into the rotating shaft portion (201), the elastic member (300) is mounted in the rotating shaft portion (201), and the elastic member (300) pushes the gear member (400) to protrude in a direction away from an axis of the rotating shaft portion (201).

2. The headrest mechanism according to claim 1, **characterized in that** the main headrest housing (100) comprises: a base shell (110) and a cover plate (120), the cover plate (120) being connected to the base shell (110), and the rotating shaft cavity being formed between the cover plate (120) and the base shell (110).

3. The headrest mechanism according to claim 1 or 2, **characterized in that** the main headrest housing (100) is provided with a snap groove (010) adapted to the gear member (400).

4. The headrest mechanism according to claim 3, **characterized in that** the snap groove (010) comprises: a first arc-shaped groove (011), a second arc-shaped groove (012) and a third arc-shaped groove (013), the first arc-shaped groove (011), the second arc-shaped groove (012) and the third arc-shaped groove (013) being disposed at intervals in a circumferential direction of the rotating shaft portion (201), and all of the first arc-shaped groove (011), the second arc-shaped groove (012) and the third arc-shaped groove (013) being disposed on the main headrest housing (100).

5. The headrest mechanism according to claim 4, **characterized in that** a first transition arc is provided at an adjacent area of the first arc-shaped groove (011) and the second arc-shaped groove (012), and a second transition arc is provided at an adjacent area of the second arc-shaped groove (012) and the third arc-shaped groove (013).

6. The headrest mechanism according to claim 3, **characterized in that** a ball head (401) is provided at an end of the gear member (400) facing the snap groove (010).

7. The headrest mechanism according to claim 1, **characterized in that** the side protective member (200) comprises: a first side headrest (210) and a second side headrest (220); and each of the first side headrest (210) and the second side headrest (220) is provided with the rotating shaft portion (201), and each of the first side headrest (210) and the second side headrest (220) is rotatably connected to the main headrest housing (100) by means of the rotating shaft portion (201).

8. The headrest mechanism according to claim 7, **characterized in that** each of the first side headrest (210) and the second side headrest (220) comprises: a head pad (211) and a side cover (212), the head pad (211) being connected to the side cover (212), and the side cover (212) being provided with the rotating shaft portion (201).

9. The headrest mechanism according to claim 7, **characterized in that** the headrest mechanism has a rest region (101), and has a folded state and an unfolded state;
in the unfolded state, the rest region (101) is located between the first side headrest (210) and the second side headrest (220); and
in the folded state, both of the first side headrest (210) and the second side headrest (220) are folded into the rest region (101).

10. A safety seat, **characterized by** comprising: a seat body and a headrest mechanism according to any one of claims 1 to 9, the headrest mechanism being mounted on the seat body.
